# EUROPEAN PATENT APPLICATION

(11) **EP 1 760 408 A2**
(43) Date of publication of application: **07.03.2007**
(21) Application number: 06119731.5
(22) Date of filing: 29.08.2006
(51) Int. Cl.: F24D 3/16

(54) **Radiating plate, in particular for heating and/or conditioning systems**

(30) Priority: 06.09.2005 IT TO20050130 U
(71) Applicant: R.B.M. S.P.A., 25075 Nave BS (IT)
(72) Inventor: Bossini, Serafino, 25121 Brescia (IT)
(74) Representative: Dini, Roberto

(57) **Abstract**

The present invention relates to a radiating plate (1), in particular for heating and/or conditioning systems, comprising:
- a first connection fitting (2) for the inlet of a fluid providing ambient heating and/or conditioning;
- a main body (3) comprising a cavity (5) for the passage of the fluid;
- a second connection fitting (4) for the outlet of the fluid.

The present invention is characterized in that said first connection fitting (2) and said second connection fitting (4) substantially face the same direction and are so designed as to be in fluid connection with each other through said cavity 5 for the passage of the fluid, the radiating plate being coil shaped.

## Description

The present invention relates to a radiating plate, in particular for heating and/or conditioning systems, according to the preamble of claim 1.

The invention can be very interesting in all those fields wherein versatility and practicality are required for the creation of heating and/or conditioning systems and the likes.

Radiating plates, in particular for heating and/or conditioning systems, are known in the art which comprise a first connection fitting for the inlet of a fluid, a main body comprising a cavity for the passage of the fluid, and a second connection fitting for the outlet of the fluid.

In the operating condition, such radiating plates are typically located on ceilings or in floors and are arranged in a substantially horizontal position on a suitable carrying structure.

Once positioned, the radiating plates are connected in series through specific pipes; the heating and/or conditioning system is then filled, in particular by filling the radiating plates with a fluid providing ambient heating and/or conditioning.

The structure and geometry of the radiating plates are very important, in particular for the purpose of allowing air to go out as the radiating plates themselves and the entire heating and/or conditioning system are filled with fluid.

The European patent No. EP 0195903 describes a radiating plate comprising two plastic plates which define a main body comprising a cavity provided with connection fittings for the inlet and outlet of the fluid; inside the cavity there is a plurality of spacer elements, which allow both plastic plates to be joined together through securing means located on the sides of each plate.

The connection fittings for the inlet and outlet of the fluid are located in opposite positions relative to the main body of the radiating plate; moreover, said connection fittings lie in the same horizontal plane as the main body of the radiating plate.

The spacer elements are so arranged as to form a first row along a straight line joining the axis of both connection fittings; the other spacer elements are arranged in rows along straight lines parallel to the one joining the axis of both fittings, in particular the barycentre of each spacer element lying in one of said straight lines.

In order to divide the flow of fluid into two parts and to allow the cavity of the radiating plate to be filled with fluid, a spacer element is located at the centre of the connection fitting for the inlet of the fluid in the radiating plate.

The radiating plate described in the above European patent has many drawbacks.

In particular, because the connection fittings for the inlet and outlet of the fluid are located in opposite points to one another relative to the main body of the radiating plate, the operations for connecting in series a plurality of radiating plates prove to be very difficult.

Furthermore, the facts that the connection fittings for the inlet and outlet of the fluid are so designed as to lie in the same horizontal plane relative to the main body of the radiating plate and that the inside of the cavity of the radiating plate comprises a plurality of spacer elements do not allow to obtain a complete discharge of air from the radiating plates when the plates themselves and the entire heating and/or conditioning system are filled with fluid.

This necessarily results in poor functionality of both the radiating plate and the heating and/or conditioning system wherein said radiating plates are used.

In this frame, the main object of the present invention is to provide a radiating plate so designed as to overcome the drawbacks and problems of prior-art radiating plates.

It is a further object of the present invention to provide a radiating plate so designed as to ensure a complete discharge of air when the radiating plates themselves and the entire heating and/or conditioning system are filled.

It is another object of the invention to provide a radiating plate so designed as to facilitate the operations for connecting in series a plurality of radiating plates.

These and other objects, which will be explained in detail below, are achieved according to the present invention through a radiating plate, in particular for ambient conditioning systems, having the features set out in the annexed claims, which form an integral part of the present description.

Further objects, features and advantages will become more apparent from the following detailed description of a preferred embodiment of the invention and from the annexed drawings, which are supplied by way of non-limiting example, wherein:
- Fig. 1 is a sectional front view of a radiating plate according to the present invention;
- Fig. 2 is a sectional side view of a detail of a radiating plate according to the present invention.

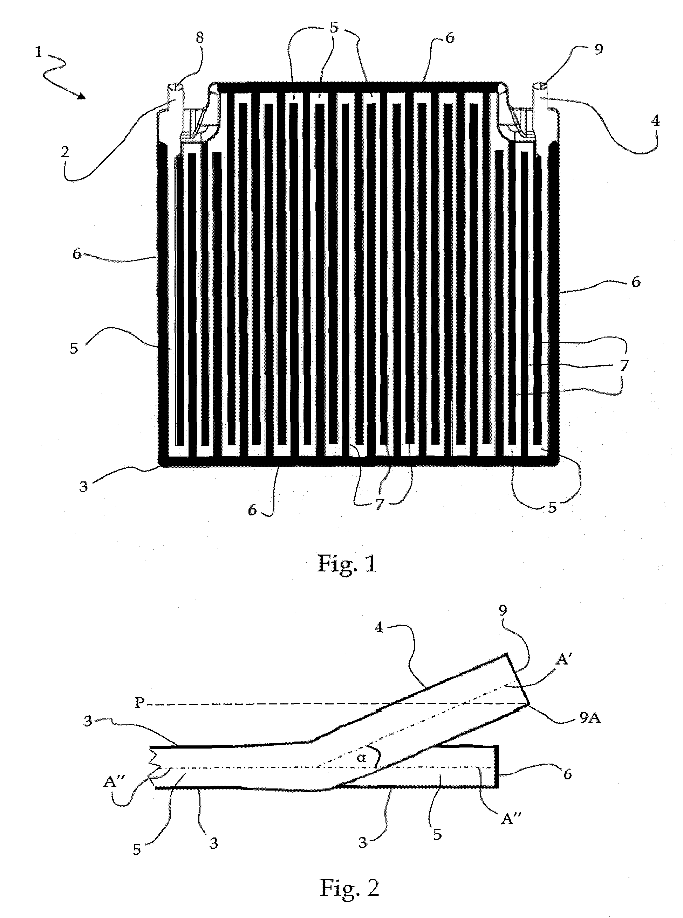

As to the description of the annexed drawings, Fig. 1 shows a front section of a radiating plate 1, in particular for heating and/or conditioning systems, according to the present invention.

Radiating plate 1 comprises:
- a first connection fitting 2 for the inlet of a fluid providing ambient heating and/or conditioning;
- a main body 3 comprising a cavity 5 for the passage of the fluid;
- a second connection fitting 4 for the outlet of the fluid.

According to the present invention, first connection fitting 2 and second connection fitting 4 substantially face in the same direction and are so designed as to be in fluid connection with each other through said cavity 5 for the passage of the fluid, the latter being coil shaped.

In particular, it can be seen in Fig. 1 that said first connection fitting 2 and said second connection fitting 4 are both present on a same side 6 of the radiating plate 1; this facilitates the operations for connecting in series a plurality of adjacent radiating plates 1, in that the second connection fitting 4 for the outlet of the fluid of each radiating plate 1 is very close to a first connection fitting 2 of an adjacent radiating plate 1.

Also, Fig. 1 clearly shows that said main body 3 comprises a plurality of walls 7 which allow said cavity 5 to be coil shaped.

Preferably, radiating plate 1 is made of a plastic material, in particular obtained by moulding; consequently, coil-shaped cavity 5 is provided through deformation of the plastic of main body 3, caused by injection of compressed air into moulds suitable for shaping cavity 5.

In Fig. 2, which shows a side section of a detail of radiating plate 1 being the subject of the present invention, it can be noted that second connection fitting 4 for the outlet of the fluid from main body 3 has an axis A' inclined though an angle α relative to an axis A" of the main body 3, in particular said angle α being between 20° and 40°. The axes A' and A" are represented in Fig. 2 by a dot-dashed line.

Furthermore, second connection fitting 4 comprises a mouth 9 so designed as to lie, in an operating condition of radiating plate 1, in a plane P being higher than main body 3 of radiating plate 1.

As shown in Fig. 2, a lower edge 9A of mouth 9 lies in said plane P, represented by a broken line.

By providing:
- radiating plate 1 with coil-shaped cavity 5;
- second connection fitting 4 with axis A' inclined through an angle α relative to axis A" of main body 3;
- second connection fitting 4 with mouth 9 lying, in an operating condition of radiating plate 1, on a plane P being higher than main body 3 of radiating plate 1, it is possible to obtain a complete discharge of air when radiating plate 1 is filled with fluid.

It is clear that, in order to facilitate manufacture of radiating plate 1 and the connection of second connection fitting 3 of a radiating plate 1 to a first connection fitting 2 of an adjacent radiating plate 1, preferably also first connection fitting 2 has an axis A' inclined trough an angle α relative to an axis A" of the main body 3, in particular said angle α being between 20° and 40°.

Moreover, also a mouth 8 of the first connection fitting 2 is so designed as to lie, in an operating condition of radiating plate 1, on a plane P being higher than main body 3 of radiating plate 1.

The features of the present invention, as well as its advantages, are apparent from the above description.

The above-described invention is susceptible of many changes and variations by those skilled in the art without departing from the scope of the inventive concept.

Also, all of the above-described details may be replaced with other technically equivalent elements in compliance with the scope of the inventive concept.

In practice, materials and sizes may be chosen according to specific needs.

## Claims

1. Radiating plate (1), in particular for heating and/or conditioning systems, comprising:
- a first connection fitting (2) for the inlet of a fluid providing ambient heating and/or conditioning;
- a main body (3) comprising a cavity (5) for the passage of the fluid;
- a second connection fitting (4) for the outlet of the fluid;
**characterized in that** said first connection fitting (2) and said second connection fitting (4) substantially face in the same direction and are so designed as to be in fluid connection with each other through said cavity (5) for the passage of the fluid, the radiating plate being coli shaped.

2. Radiating plate (1) according to claim 1, **characterized in that** said first connection fitting (2) and said second connection fitting (4) are both located on a same side (6) of the radiating plate (1).

3. Radiating plate (1) according to any of the previous claims, **characterized in that** said second connection fitting (4) has an axis (A') inclined through an angle α relative to an axis (A") of the main body (3).

4. Radiating plate (1) according to the previous claim, **characterized in that** said angle α is between 20° and 40°.

5. Radiating plate (1) according to one or more of the previous claims 1 to 3, **characterized in that** said second connection fitting (4) comprises a mouth (9) lying, in an operating condition of the radiating plate (1), on a plane (P) being higher than the main body (3) of the radiating plate (1).

6. Radiating plate (1) according to the previous claim, **characterized in that** a lower edge (9A) of the mouth (9) lies on said plane (P).

7. Radiating plate (1) according to claim 1, **characterized in that** said first connection fitting (2) has an axis (A') inclined through an angle α relative to an axis (A") of the main body (3), in particular said angle α being between 20° and 40°.

8. Radiating plate (1) according to claim 1, **characterized in that** said first connection fitting (2) comprises a mouth (8) so designed as to lie, in an operating condition of the radiating plate (1), on a plane (P) being higher than the main body (3) of the radiating plate (1).

9. Radiating plate (1) according to claim 1, **characterized in that** said main body (3) comprises a plurality of walls (7) which allow to provide said coil-shaped cavity (5).

10. Radiating plate (1) according to claim 1, **characterized by** being made of a plastic material, in particular obtained by moulding.

11. Radiating plate (1) according to the previous claim, **characterized in that** said coil-shaped cavity (5) is provided through deformation of the plastic of the main body (3), caused by injection of compressed air into moulds.
